# EUROPÄISCHE PATENTSCHRIFT

(11) **EP 1 575 117 B1**
(45) Veröffentlichungstag und Bekanntmachung des Hinweises auf die Patenterteilung: **18.06.2008**
(21) Anmeldenummer: 04104906.5
(22) Anmeldetag: 07.10.2004
(51) Int. Cl.: H01M 10/10, H01M 10/12, H01M 2/36

(54) **Wartungsfreier Akkumulator und Verfahren zu dessen Herstellung**
Maintenance-free accumulator and procedure for its production
Accumulateur sans entretien et procédure pour sa production

(30) Priorität: 09.03.2004 DE 102004011270
(43) Veröffentlichungstag der Anmeldung: 14.09.2005
(73) Patentinhaber: Deutsche EXIDE Standby GmbH, 63654 Büdingen (DE)
(72) Erfinder: EBERT, Helmut, 45307, Essen (DE); MICHELS, Ludger, 47279, Duisburg (DE); KRAMM, Friedrich, 63654, Büdingen (DE); NIEPRASCHK, Harald, 63654, Büdingen (DE)
(74) Vertreter: Weber, Roland

(56) Entgegenhaltungen:
- EP-A- 0 491 150
- DE-A1- 1 929 575
- DE-A1- 3 041 953
- DE-A1- 3 610 951
- US-A- 3 305 396
- US-A- 5 664 321

## Beschreibung

Die Erfindung betrifft einen wartungsfreien Akkumulator, insbesondere einen verschlossenen wartungsfreien Akkumulator für Unterseeboote, und ein Verfahren zur Herstellung eines solchen Akkumulators. Speziell handelt es sich bei dem erfindungsgemäßen Akkumulator um einen Bleiakkumulator mit einem oder mehreren Zellengefäßen mit jeweils einem Plattenblock mit positiven und negativen Plattensätzen, wobei die Platten jedes Plattensatzes durch Polbrücken miteinander verbunden sind.

Übliche Unterseeboote verfügen in der Regel über mehrere Antriebsarten bzw. Energiequellen für den Antrieb und die Energieversorgung. Für Tauch- und Schleichfahrten wird die Energie für den Antrieb üblicherweise mittels Brennstoffzellen oder Batterien bereitgestellt. Da diese Energieversorgung für Tauchfahrten von mehreren Stunden bis Tagen ausreichen muß, benötigen Unterseeboote Batterien mit hoher und lang anhaltender Kapazität. Bei üblichen Unterseebooten ist daher etwa ein Drittel des nutzbaren Volumens im Unterseeboot mit Batterien und der dazugehörigen Wartungs- und Versorgungstechnik gefüllt. Ein typisches Unterseeboot kann etwa 300 Einzelzellen aufweisen, wobei jede Einzelzelle ca. eine Tonne wiegen kann. Von den Batterien eines Unterseebootes wird eine Lebensdauer von ca. 6 Jahren erwartet, wonach das Unterseeboot zerlegt und die Batterien vollständig gegen neue ausgetauscht werden. Die wesentlichen Parameter von Batterien für ein Unterseeboot sind Kapazität und Volumen der Batterien. Das Gewicht der Batterien spielt bei Unterseebooten nur eine untergeordnete Rolle. Ein Ziel bei der Entwicklung verbesserter Batterien für Unterseeboote ist daher, möglichst hohe Kapazität bei möglichst geringem Volumenverbrauch zu erreichen. Weitere wichtige Gesichtspunkte bei Batterien für Unterseeboote sind Betriebszuverlässigkeit, Wartungsaufwand und Wasserstoffentwicklung. Die Betriebszuverlässigkeit der Batterien im Einsatz ist ein besonders wichtiger Gesichtspunkt, da Störungen und Ausfälle der Batterien im Tauchfahrtbetrieb erhebliche Gefahren für die Besatzung und das Unterseeboot selbst darstellen können. Ein Auftauchen des Unterseebootes zu Reparaturzwecken ist im Einsatz nicht jederzeit gefahrlos möglich. Der Gesichtspunkt der Wartungsfreundlichkeit der Batterien umfaßt einerseits den personellen Aufwand und die Häufigkeit erforderlicher Wartungstätigkeiten und andererseits die für die Wartung erforderliche Ausrüstung, die einen nicht unerheblichen Verbrauch an nutzbarem Volumen des Unterseebootes ausmachen kann. Die Wasserstoffentwicklung an den Elektroden von Batterien bringt eine Explosionsgefahr und das technische Problem der Wasserstoffabfuhr mit sich.

Derzeit werden in Unterseebooten für die Energieversorgung geschlossene Bleiakkumulatoren mit Flüssigelektrolyten verwendet. Der Flüssigelektrolyt enthält im wesentlichen Schwefelsäure, Wasser und gegebenenfalls geringe Mengen an weiteren Zusätzen zu verschiedenen Zwecken. Der Gehalt an Schwefelsäure im Flüssigelektrolyten liegt im Bereich von 25 bis 40 Gew.-%. Ein Problem der bekannten Bleiakkumulatoren mit Flüssigelektrolyten besteht darin, daß es beim Betrieb zur Entmischung des Elektrolyten kommt. Innerhalb der Zelle bilden sich Bereiche mit unterschiedlich hohen Schwefelsäurekonzentrationen aus. Um diesem Problem zu begegnen, wird in bekannten Akkumulatoren für Unterseeboote eine Umwälzung des Elektrolyten innerhalb der Zelle durch Einblasen von Luft über Rohrleitungen vorgenommen. Dies bedeutet einen apparativen Aufwand, der außerhalb der Akkumulatorenzellen wenigstens Kompressoren und ein entsprechendes Leitungssystem erfordert.

Ein weiterer Nachteil bekannter Bleiakkumulatoren mit Flüssigelektrolyten für Unterseeboote besteht darin, daß in regelmäßigen Abständen das an den Elektrodenplatten elektrolytisch zersetzte Wasser aus dem Elektrolyten ersetzt, d.h. nachgefüllt werden muß. Durch den Wasserverlust kommt es im Elektrolyten zu einer Veränderung der Schwefelsäurekonzentration und damit zu einer Veränderung der Leistungsfähigkeit des Akkumulators. Außerdem sinkt der Elektrolytspiegel in den Akkumulatorzellen. Aus diesem Grund sind die Zellen in regelmäßigen Abständen, die je nach Beanspruchung der Akkumulatoren variieren, mit Wasser zu befüllen. Der Füllstand der Zelle mit Elektrolyten ist daher ständig zu überwachen. Es sind zwar automatische Wassernachfüllsysteme bekannt, diese arbeiten jedoch nicht mit ausreichender Zuverlässigkeit und sind deshalb für den Einsatz in Unterseebooten ungeeignet. Der Elektrolytstand wird in Akkumulatoren von Unterseebooten daher nach wie vor durch Inaugenscheinnahme überprüft.
Im Stand der Technik sind wartungsfreie Bleiakkumulatoren bekannt, bei denen der Schwefelsäureelektrolyt in einem Gel oder in einem Vlies gebunden ist. Als Gelbildner wird bekanntermaßen Kieselsäure verwendet. Solche wartungsfreien Gelakkumulatoren finden beispielsweise Einsatz in Landfahrzeugen, wie Pkw, Lkw oder Panzerfahrzeugen, die mit Batterien von relativ geringer Größe und Leistung auskommen, da der Strom der Batterie im wesentlichen für das Anlassen des Motors benötigt wird. Die bekannten Gelbatterien haben Kapazitäten in der Größenordnung von 1 bis 3.000 Amperestunden (Ah). Das Befüllen dieser bekannten Gelbatterien mit dem Gelelektrolyten erfolgt in der Regel durch schnelles Einfüllen des in flüssigem Zustand gehaltenen Gels, wobei zur Beschleunigung des Einfüllvorgangs häufig Unterdruck angelegt wird. Auf diese Weise lassen sich Gelbatterien bis zu einer Füllhöhe von höchstens etwa 60 - 70 cm gerade noch gleichmäßig mit dem Gelelektrolyten befüllen, ohne daß die einsetzende Gelierung hier Probleme bereitet. Bei den bekannten Gelbatterien wird das Zellengefäß mit dem darin befindlichen Plattenblock mit positiven und negativen Plattensätzen bereitgestellt und der durch Bewegung, wie z.B. durch Rühren in flüssigem Zustand gehaltene Gelelektrolyt von oben in das Zellengefäß eingefüllt. Das flüssige Gel fließt dabei zunächst in den unteren Bereich des Zellengefäßes und steigt zwischen den einzelnen Elektrodenplatten an. Weiteres Gel fließt von oben zwischen den Platten nach. Aufgrund sofort einsetzender Wärmeentwicklung und wegen des sogenannten Filtrationseffektes setzt der Geliervorgang, d.h. die Verfestigung des Gels, sofort mehr oder weniger stark ein.

Die US 5,664,321 beschreibt ein Verfahren zur Herstellung eines Bleiakkumulators, bei welchem in ein Zellengefäß Elektrodenplatten eingebaut werden können und zunächst Schwefelsäure in der gewünschten Elektrolytkonzentration vorgelegt wird, womit die Platten formiert werden. Anschließend wird Kieselsol mit einer Konzentration von 15 bis 60 Gew.-% zugegeben und gemischt. Das Mischen erfolgt durch 1 bis 100 Drehungen des Akkumulators während 1 bis 10 Minuten oder durch vorübergehendes Überladen des Akkumulators, wobei Gas entsteht. Dieses Verfahren ist bei größeren Füll- bzw. Zellenhöhen wegen der thermischen Probleme durch Formation in hoher Säuredichte und wegen der ungenügenden Elektrolytdurchmischung bei Füllhöhen von mehr als 300 mm nicht anwendbar.

Die DE 1 929 575 beschreibt ein Verfahren zum Füllen eines Akkumulators mit eine Gelelektrolyten, bei welchem ein Vakuum angelegt wird und die Füllung vom Boden aus entweder durch Öffnungen im Boden des Gehäuses oder durch Einführen vom bis zum Boden reichender Kapillarröhrchen vorgenommen wird. Zum Befüllen von Akkumulatoren mit großen Füllhöhen ist dieses Verfahrens nicht geeignet, da eine Füllung über Kapillaren nicht möglich ist, da das Gel sich bereits während des Befüllvorgangs in dem Akkumulator verfestigen würde, was einerseits zur Schichtbildung und zu einer Verschlechterung der Qualität des Akkumulators und andererseits zu einer Verstopfung der Kapillaren führen würde.

Je größer die Bauhöhe des Zellengefäßes ist, desto eher kommt es zu Hohlräumen, Lufteinschlüssen und anderen Füllfehlern, die im Bereich der halben Höhe des Plattenblocks am stärksten auftreten. Qualität und Funktionsfähigkeit der Batterie werden dadurch erheblich beeinträchtigt. Es ist daher bisher nicht gelungen, Gelakkumulatoren mit größeren Bauhöhen, wie sie beispielsweise für Unterseeboote erforderlich sind, fehlerfrei herzustellen.

Die Anforderungen an die Kapazität von Akkumulatoren für Unterseeboote liegen in der Regel bei mindestens 6.000 Ah pro Zelle, üblicherweise jedoch bei 9.000 - 21.000 Ah, bezogen auf die Langzeitkapazität bei 100 h. Die Bauhöhen der Zellengefäße von Akkumulatoren für Unterseeboote betragen mindestens 80 cm, üblicherweise jedoch 100 - 160 cm.

Der Erfindung lag daher die Aufgabe zugrunde, einen Akkumulator mit hoher Kapazität bereitzustellen, wie er insbesondere für Unterseeboote benötigt wird, der im wesentlichen wartungsfrei, zuverlässig und langlebig ist. Eine weitere Aufgabe bestand darin, ein Verfahren bereitzustellen, mit dem sich ein solcher wartungsfreier Akkumulator fehlerfrei herstellen läßt.

Die Aufgabe wird erfindungsgemäß gelöst durch einen wartungsfreien Akkumulator, insbesondere für Unterseeboote, mit einem oder mehreren Zellengefäßen mit jeweils einem Plattenblock mit positiven und negativen Plattensätzen, wobei die Platten jedes Plattensatzes elektrisch leitend miteinander verbunden sind, und die Zellengefäße mit einem thixotropen Gelelektrolyten befüllt sind, der dadurch gekennzeichnet ist, daß die Kapazität pro Zellengefäß des Akkumulators wenigstens 6.000 Amperestunden (Ah) und die Füllhöhe der Zellengefäße mit Gelelektrolyt vom Boden der Zellengefäße aus wenigstens 800 mm beträgt, hergestellt durch ein Verfahren, bei dem man
a) Zellengefäße mit jeweils einem Plattenblock mit positiven und negativen Plattensätzen bereitstellt, wobei die Platten jedes Plattensatzes elektrisch leitend miteinander verbunden sind,
b) für jedes Zellengefäß ein Füllrohr bereitstellt, das von oben in das Zellengefäß hineinragt und in der Nähe des Bodens des Zellengefäßes und in einem Abstand dazu mündet,
c) einen thixotropen Gelelektrolyten durch das Füllrohr in das Zellengefäß bis zu einer Füllhöhe von wenigstens 800 mm vom Boden des Zellengefäßes einleitet.

Weiterhin wird die Aufgabe gelöst durch ein Verfahren zur Herstellung eines wartungsfreien Akkumulators, insbesondere für Unterseeboote, nach der vorgenannten Art, bei dem man
a) Zellengefäße mit jeweils einem Plattenblock mit positiven und negativen Plattensätzen bereitstellt, wobei die Platten jedes Plattensatzes elektrisch leitend miteinander verbunden sind,
b) für jedes Zellengefäß ein Füllrohr bereitstellt, das von oben in das Zellengefäß hineinragt und in der Nähe des Bodens des Zellengefäßes und in einem Abstand dazu mündet,
c) einen thixotropen Gelelektrolyten durch das Füllrohr in das Zellengefäß bis zu einer Füllhöhe von wenigstens 800 mm vom Boden des Zellengefäßes einleitet.

Der erfindungsgemäße wartungsfreie Akkumulator mit thixotropem Gelelektrolyten mit einer Kapazität von wenigstens 6.000 Ah und einer Füllhöhe der Zellengefäße mit Gelektrolyt von wenigstens 800 mm stellt eine fundamentale Bereicherung für die Technik insbesondere von Unterseebooten, aber auch von anderen Anwendungen, bei denen Hochleistungsakkumulatoren benötigt werden, dar. Er ersetzt die klassische Säurebatterie mit Flüssigelektrolyt, die bisher den Stand der Technik auf dem Gebiet der Hochleistungsakkumulatoren mit großer Bauhöhe darstellte. Bislang war es nicht möglich, Gelakkumulatoren in den Abmessungen des erfindungsgemäßen Akkumulators fehlerfrei herzustellen. Gleichzeitig hat der erfindungsgemäße Akkumulator gegenüber der Säurebatterie mit Flüssigelektrolyt alle Vorteile des wartungsfreien Gelakkumulators, der bisher nur in kleiner Bauweise mit Kapazitäten im Bereich von etwa 1 bis 3.000 Ah und Höhen bis maximal etwa 600 - 700 mm fehlerfrei herstellbar war. Im Unterseeboot kann der erfindungsgemäße wartungsfreie Akkumulator ohne aufwendige und volumenzehrende Wartungstechnik und ohne das Erfordernis, in regelmäßigen Abständen Wasser nachzufüllen, bis zu einer Betriebsdauer von etwa 5 - 10 Jahren eingesetzt werden. Der Wegfall einer aufwendigen Wartungsanlage, wie sie für klassische Säurebatterien mit Flüssigelektrolyt erforderlich ist, liefert im Unterseeboot mehr freies Volumen, das für andere Zwecke genutzt werden kann. Darüber hinaus hat der erfindungsgemäße Gelakkumulator gegenüber der klassischen Säurebatterie den Vorteil, daß im Betrieb erheblich weniger Wasserstoffgas entwickelt wird, welches abgeführt werden muß und eine Brand- und Explosionsgefahr darstellt.

Gemäß einer bevorzugten Ausführungsform der Erfindung enthält der thixotrope Gelelektrolyt zum Befüllen wenigstens 5,0 Gew.-% SiO₂ (Silica) und wenigstens 25,0 Gew.-% H₂SO₄, bezogen auf das Gesamtgewicht des Gelelektrolyten. Es ist weiterhin erfindungsgemäß bevorzugt, daß der thixotrope Gelelektrolyt bis zu 3,0 Gew.-%, vorzugsweise 1,0 - 3,0 Gew.-% Phosphorsäure enthält. Der Gehalt an H₃PO₄ in dem thixotropen Gelelektrolyten stabilisiert die Zyklenfestigkeit des Akkumulators. In einer weiterhin bevorzugten Ausführungsform enthält der thixotrope Elektrolyt bis zu 1,5 Gew.-%, vorzugsweise 1,0 bis 1,5 Gew.-% Na₂SO₄. Na₂SO₄ stabilisiert und sichert eine Restleitfähigkeit des Akkumulators bei sehr tiefer Entladung. Ein erfindungsgemäß besonders bevorzugter thixotroper Gelelektrolyt weist die folgende Zusammensetzung auf: 9 - 12 Gew.-% Siliciumdioxid, 35 - 40 Gew.-% Schwefelsäure, 0 - 3 Gew.-% Phosphorsäure, bis zu 1,5 Gew.-% Na₂SO₄, Rest Wasser.

Die Kapazität des erfindungsgemäßen Akkumulators hängt u.a. von der Größe der einzelnen Zellen, der Größe, der Anzahl und der Anordnung sowie der Art der Elektrodenplatten und der Füllhöhe des Elektrolyten in den Zellengefäßen ab. Je nach Anwendungsgebiet sind die einzelnen Parameter zu variieren. Generell gilt jedoch, daß die erreichbare Kapazität des Akkumulators mit der Höhe und der Breite, d.h. den Abmessungen parallel zur Ebene der einzelnen Platten, zunimmt. Eine Erhöhung der Anzahl der Platten und eine in der Regel damit einhergehende Vergrößerung des Akkumulators in einer Richtung senkrecht zur Plattenebene erhöht lediglich die vom Akkumulator gelieferte Spannung. Eine Erhöhung der Gesamtkapazität einer Vielzahl von Akkumulatoren läßt sich zwar auch dadurch erreichen, daß die Anzahl der Einzelakkumulatoren bzw. Einzelzellen erhöht wird, dies erhöht jedoch auch den Volumenverbrauch der Gesamtzahl an Akkumulatoren, da jede Einzelzelle Raum für die Pole und Polbrücken sowie die elektrischen Anschlüsse an der Oberseite jeder Zelle erfordert. Darüber hinaus müssen für jede Zelle Stapeleinrichtungen und Halterungen vorgesehen sein, die ebenfalls Volumen verbrauchen. Des weiteren erfordern mehrere Zellen gegenüber einer einzelnen zusätzliches Material für Zellgehäusewände, Polbrücken, Pole usw., was nicht nur mit erhöhten Materialkosten sondern auch mit zusätzlichem Gewicht einhergeht. Gerade bei Anwendungen, bei denen das Volumen eine entscheidende Rolle spielt, aber auch zur Einsparung von Materialkosten und Gewicht ist es erstrebenswert, möglichst hohe Akkumulatorkapazität mit möglichst wenig Einzelzellen zu erzielen. Für den Einsatz in Unterseebooten, wo möglichst viel Volumen eingespart werden soll, ist es daher bevorzugt, wenn der erfindungsgemäße Akkumulator hohe Zellengefäße aufweist, mit denen hohe Kapazitäten erreicht werden können. Bei erfindungsgemäß besonders bevorzugten Ausführungsformen beträgt daher die Füllhöhe der Zellengefäße mit Gelelektrolyt vom Boden der Zellengefäße aus wenigstens 1.000 mm. Noch bessere Energiedichten werden mit Füllhöhen von wenigstens 1.200 mm oder gar 1.500 mm erreicht. Derzeit werden in Unterseebooten Akkumulatoren mit Bauhöhen von bis zu 1,6 m und mehr eingesetzt. Füllhöhen der Zellengefäße in der Größenordnung von bis zu 2.000 mm, besonders bevorzugt bis zu 1.500 mm sind daher erfindungsgemäß vorteilhaft.

Wie oben bereits ausgeführt, hängt die Kapazität des Akkumulators pro Zellengefäß nicht nur von der mit Gelelektrolyt gefüllten Höhe des Zellengefäßes sondern auch von der Breite in Richtung der Plattenebene ab. Aus praktischen Gründen ist auch die Breite der Zellengefäße nicht beliebig erweiterbar. Insgesamt sollte die Größe des Akkumulators so gewählt werden, daß die Kapazität pro Zellengefäß des Akkumulators wenigstens 6.000 Amperestunden (Ah), vorzugsweise wenigstens 10.000 Ah, besonders bevorzugt wenigstens 15.000 Ah, ganz besonders bevorzugt wenigstens 18.000 Ah bis zu 21.000 Ah beträgt. Die erforderlichen Abmessungen des Zellengefäßes und die erforderlichen Plattengrößen und die Plattenanzahl lassen sich vom Fachmann bei vorgegebener gewünschter elektrischer Spannung und Kapazität leicht bestimmen. Obwohl der Kapazität des erfindungsgemäßen Akkumulators nach oben theoretisch keine Grenzen gesetzt sein sollten, ergeben sich auch für den erfindungsgemäßen Akkumulator aus praktischen Gründen Obergrenzen, da die Erhöhung der Kapazität u.a. auch eine entsprechend höhere Menge an einzufüllendem Gelelektrolyten erfordert. Bei zu großen Mengen an Gelelektrolyten, der in ein Zellengefäß einzufüllen ist, können sich auch für den erfindungsgemäßen Akkumulator die eingangs genannten Probleme ergeben. Es ist daher vorteilhaft, wenn die Kapazität des erfindungsgemäßen Akkumulators pro Zellengefäß 30.000 Ah, vorzugsweise 25.000 Ah, besonders bevorzugt etwa 22.000 Ah nicht übersteigt.

Unter Berücksichtigung der vorgenannten Kriterien für die Dimensionierung des erfindungsgemäßen Akkumulators ist bei einer vorteilhaften Ausführungsform jedes Zellengefäß mit wenigstens 60 l, vorzugsweise wenigstens 100 l, besonders bevorzugt wenigstens 150 l Gelelektrolyt befüllt. Aus praktischen Gründen sollte die Menge an Gelelektrolyt pro Zellengefäß 300 l nicht überschreiten. Vorteilhaft sind Mengen an Gelelektrolyt unter 250 l, besonders bevorzugt unter 220 l.

Zweckmäßigerweise sind bei dem erfindungsgemäßen Akkumulator die positiven Platten der Plattensätze als Bleiplatten ausgebildet. Bei einer alternativen Ausführungsform, die besonders bevorzugt ist, werden die positiven Platten der Plattensätze durch eine Vielzahl von Bleistäben bzw. Bleiseelen gebildet, die in nebeneinander angeordneten länglichen Taschen eines Gewebes eingeschoben und außerhalb der Taschen elektrisch miteinander verbunden sind. Diese Ausführungsform der Bleiplatten ist auf dem Gebiet unter dem Begriff "Röhrchenplatten" bekannt. Die negativen Platten des erfindungsgemäßen Akkumulators sind zweckmäßigerweise als ein mit Aktivmasse in pastöser Form beschichtetes Kupfergitter ausgebildet. Derartige Kupfer-Gitterplatten sind auf dem Gebiet ebenfalls bekannt.

Der erfindungsgemäße Akkumulator wird nach dem oben genannten erfindungsgemäßen Verfahren hergestellt. Das Füllrohr, das von oben in das Zellengefäß hineinragt und in der Nähe des Bodens des Zellengefäßes und in einem Abstand dazu mündet, kann nach dem Befüllen des Zellgefäßes mit Gelelektrolyt einfach in der Zelle belassen werden. Alternativ kann es aus der Zelle entfernt werden, bevor der Gelelektrolyt erstarrt ist. Der Vorteil des erfindungsgemäßen Verfahrens gegenüber dem Stand der Technik besteht darin, daß das Befüllen des Zellengefäßes im unteren Bereich des Zellengefäßes beginnt und der flüssige Gelelektrolyt in dem Zellengefäß von unten nach oben ansteigt, ohne daß es zu Lufteinschlüssen oder Hohlräumen im Bereich der mittleren Höhe der Zellengefäße kommt.

Zweckmäßigerweise wird bei dem erfindungsgemäßen Verfahren der thixotrope Gelelektrolyt bis im wesentlichen unmittelbar vor dem Einleiten in das Zellengefäß durch Rühren in fließfähigem Zustand gehalten. Des weiteren ist es vorteilhaft, wenn der thixotrope Gelelektrolyt bis im wesentlichen unmittelbar vor dem Einleiten und/oder während des Einleitens in das Zellengefäß bei einer Temperatur unterhalb von 25 °C, vorzugsweise bei einer Temperatur im Bereich von 10 °C bis 20 °C, besonders bevorzugt bei einer Temperatur im Bereich von 17 °C bis 19 °C gehalten wird. Je höher die Temperatur des erfindungsgemäß eingesetzten, Silica enthaltenden Gelelektrolyten ist, desto eher setzt die Verfestigung des Gelelektrolyten ein. Die Temperatur des flüssigen Gelelektrolyten wird beim Einfüllen daher zweckmäßigerweise niedrig gehalten. Sehr niedrige Temperaturen erfordern jedoch eine aufwendige Kühlung bei der Herstellung der Akkumulatoren, was mit erhöhten Kosten, insbesondere in den warmen Monaten des Jahres, einhergeht. Die Einhaltung der vorgenannten Temperaturbereiche hat sich daher als besonders zweckmäßig erwiesen.

Des weiteren hat es sich als besonders vorteilhaft erwiesen, wenn die Platten der Plattensätze vor dem Einfüllen des Gelelektrolyten mit Wasser oder verdünnter Schwefelsäure mit bis zu 15 Gew.-% H₂SO₄, vorzugsweise bis zu 10 Gew.-% H₂SO₄ befeuchtet oder benetzt werden. Zweckmäßigerweise erreicht man dies, indem man die Platten vor dem Einsetzen in das Zellengefäß in Wasser oder verdünnte Schwefelsäure eintaucht oder indem man nach dem Einsetzen der Platten in das Zellengefäß dieses mit Wasser oder verdünnter Schwefelsäure befüllt und das Wasser oder die verdünnte Schwefelsäure anschließend ablaufen läßt oder absaugt. Überraschenderweise hat sich gezeigt, daß durch diese Maßnahme der eingangs genannte Filtrationseffekt, der bereits bei dem Befüllen kleiner Akkumulatoren zur Befüllungsfehlern führt, verringert werden kann. Das Befeuchten oder Benetzen der Platten mit Wasser oder verdünnter Schwefelsäure verbessert somit zusätzlich die Gleichmäßigkeit der Befüllung mit Gelelektrolyt.

Nach dem Befüllen der Zellengefäße mit dem thixotropen Gelelektrolyten läßt man die Zellengefäße zweckmäßigerweise für einen Zeitraum ruhig stehen, bis der Gelelektrolyt erstarrt ist.

Weitere Vorteile, Merkmale und Anwendungsmöglichkeiten der vorliegenden Erfindung ergeben sich aus der nachfolgenden Beschreibung von Beispielen, bevorzugten Ausführungsformen und Figuren.
- Figur 1: zeigt eine schematische, aufgebrochene Ansicht eines Unterseebootes mit Akkumulatoren.
- Figur 2: zeigt eine schematische Darstellung eines erfindungsgemäßen Akkumulators.

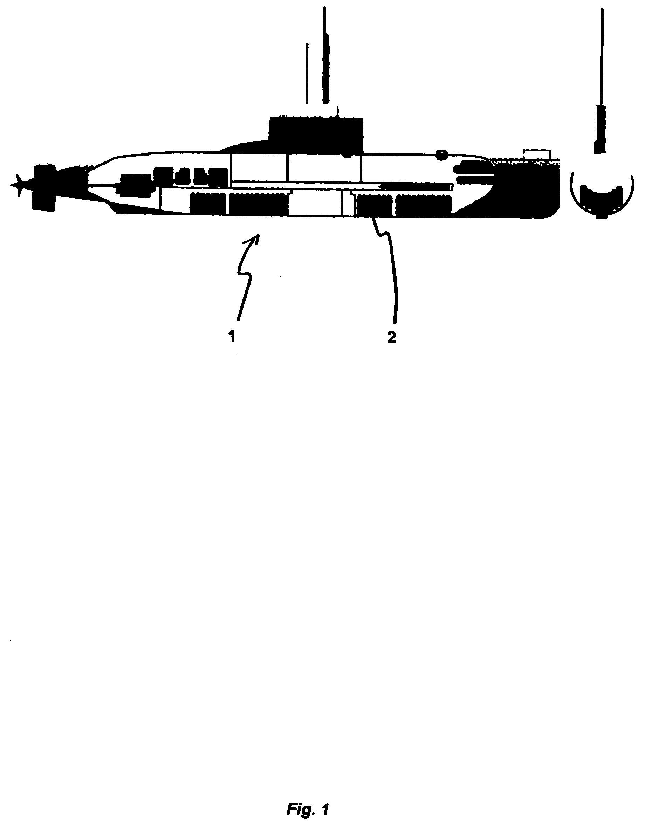

Figur 1 ist eine schematische, aufgebrochene Darstellung eines herkömmlichen Unterseebootes 1 von der Seite sowie im Querschnitt senkrecht zur Längsachse. Das Unterseeboot 1 ist mit Akkumulatoren 2 ausgerüstet, die im Bug des Unterseebootes untergebracht sind und etwa ein Drittel des in dem Unterseeboot zur Verfügung stehenden Volumens ausmachen.

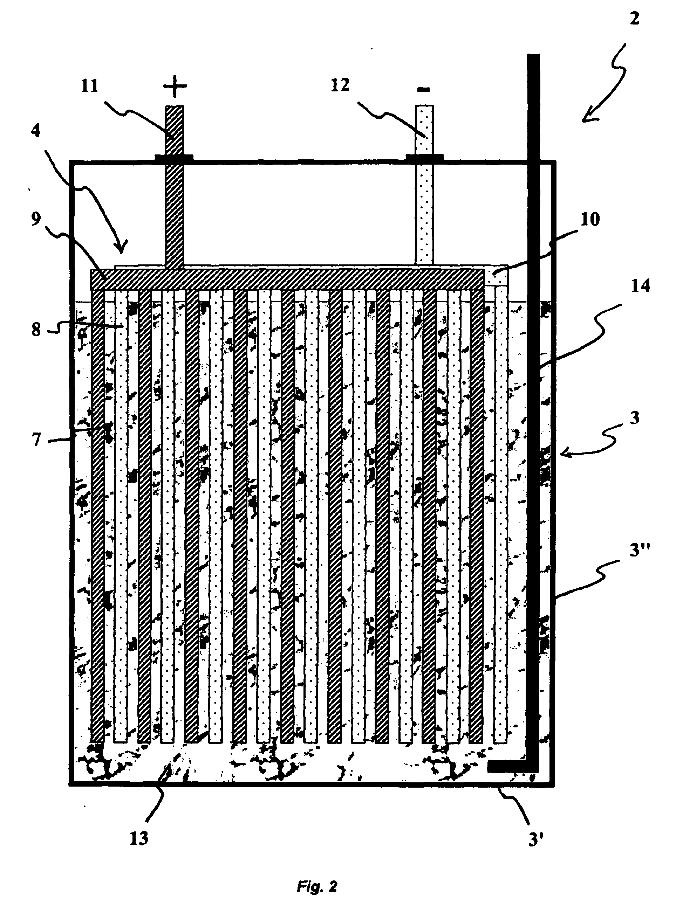

Figur 2 zeigt eine erfindungsgemäßen Akkumulator 2, bestehend aus einem Zellengefäß 3 mit Zellengefäßseitenwänden 3" und einem Zellengefäßboden 3'. In das Zellengefäß 3 ist ein Plattenblock 4 mit positiven Platten 7 und negativen Platten 8 eingesetzt. Die einzelnen Platten 7 bzw. 8 bilden positive bzw. negative Plattensätze. Die positiven Platten 7 sind über eine Polbrücke 9 elektrisch leitend miteinander verbunden, und die negativen Platten 8 sind über eine Polbrücke 10 elektrisch leitend miteinander verbunden. Von den Polbrücken 9 und 10 erstrekken sich Pole 11 und 12 durch den Deckel des Zellengefäßes 3 für den elektrischen Anschluß des Akkumulators aus dem Zellengefäß heraus. Ein Füllrohr 14 erstreckt sich von oben in das Zellengefäß 3 hinein und mündet in der Nähe des Bodens 3' des Zellengefäßes 3. Das Zellengefäß 3 ist in erfindungsgemäßer Weise mit Gelelektrolyt 13 gefüllt. Die Gesamthöhe des Zellengefäßes 3 ist größer oder gleich etwa 1 Meter, und die Füllhöhe des Zellengefäßes mit dem Gelelektrolyten 13 ist vom Boden 3' des Zellengefäßes aus größer oder gleich 800 mm.

### Bezugszeichenliste

- 1: Unterseeboot
- 2: Akkumulator
- 3: Zellengefäß
- 3': Boden des Zellengefäßes
- 3": Seitenwände des Zellengefäßes
- 4: Plattenblock
- 5: positiver Plattensatz
- 6: negativer Plattensatz
- 7: positive Platten
- 8: negative Platten
- 9: Polbrücke eines positiven Plattensatzes
- 10: Polbrücke eines negativen Plattensatzes
- 11: Pole eines positiven Plattensatzes
- 12: Pole eines negativen Plattensatzes
- 13: Gelelektrolyt
- 14: Füllrohr

## Patentansprüche

1. Wartungsfreier Akkumulator, insbesondere für Unterseebote, mit einem oder mehreren Zellengefäßen (3) mit jeweils einem Plattenblock (4) mit positiven (5) und negativen (6) Plattensätzen, wobei die Platten (7,8) jedes Plattensatzes (5, 6) elektrisch leitend miteinander verbunden sind, und die Zellengefäße (3) mit einem thixotropen Gelelektrolyten befüllt sind **dadurch gekennzeichnet, daß** die Kapazität pro Zellengefäß (3) des Akkumulators wenigstens 6.000 Amperestunden (Ah) und die Füllhöhe der Zellengefäße mit Gelelektrolyt vom Boden (3') der Zellengefäße (3) aus wenigstens 800 mm beträgt hergestellt durch ein Verfahren, bei dem man
a) Zellengefäße (3) mit jeweils einem Plattenblock (4) mit positiven (5) und negativen (6) Plattensätzen bereitstellt, wobei die Platten (7,8) jedes Plattensatzes (5, 6) elektrisch leitend miteinander verbunden sind,
b) für jedes Zellengefäß (3) ein Füllrohr (14) bereitstellt, das von oben in das Zellengefäß (3) hineinragt und in der Nähe des Bodens (3') des Zellengefäßes (3) und in einem Abstand dazu mündet,
c) einen thixotropen Gelelektrolyten(13) durch das Füllrohr (14) in das Zellengefäß (3) bis zu einer Füllhöhe von wenigstens 800 mm vom Boden (3') des Zellengefäßes (3) einleitet.

2. Akkumulator nach Anspruch 1, **dadurch gekennzeichnet, daß** der thixotrope Gelelektrolyt wenigstens 5,0 Gew.-% SiO₂ und wenigstens 25,0 Gew.-% H₂SO₄, bezogen auf das Gesamtgewicht des Gelelektrolyten enthält.

3. Akkumulator nach einem der Ansprüche 1 oder 2, **dadurch gekennzeichnet, daß** die Füllhöhe der Zellengefäße mit Gelelektrolyt vom Boden (3') der Zellengefäße (3) aus wenigstens 1.000 mm, vorzugsweise wenigstens 1.200 mm, besonders bevorzugt wenigstens 1.500 mm beträgt.

4. Akkumulator nach einem der Ansprüche 1 bis 3, **dadurch gekennzeichnet, daß** die Kapazität pro Zellengefäß des Akkumulators wenigstens 10.000 Amperestunden (Ah), vorzugsweise wenigstens 15.000 Ah, besonders bevorzugt wenigstens 18.000 Ah beträgt.

5. Akkumulator nach einem der Ansprüche 1 bis 4, **dadurch gekennzeichnet, daß** jedes Zellengefäß mit wenigstens 60 Litern, vorzugsweise wenigstens 100 Litern, besonders bevorzugt wenigstens 150 Litern Gelelektrolyt befüllt ist.

6. Akkumulator nach einem der Ansprüche 1 bis 5, **dadurch gekennzeichnet, daß** die negativen Platten (8) der Plattensätze ein beschichtetes Kupfergitter als Stromableiter und Aktivmasseträger aufweisen.

7. Akkumulator nach einem der Ansprüche 1 bis 6, **dadurch gekennzeichnet, daß** die positiven Platten (7) der Plattensätze Bleiplatten sind.

8. Akkumulator nach einem der Ansprüche 1 bis 6, **dadurch gekennzeichnet, daß** die positiven Platten der Plattensätze eine Vielzahl von Bleistäben bzw. Bleiseelen aufweisen, die in nebeneinander angeordneten länglichen Taschen eines Gewebes eingeschoben und außerhalb der Taschen elektrisch miteinander verbunden sind.

9. Akkumulator nach einem der Ansprüche 1 bis 8, **dadurch gekennzeichnet, daß** der thixotrope Gelelektrolyt wenigstens 9,0 Gew.-% SiO₂ und wenigstens 30,0 Gew.-% H₂SO₄, vorzugsweise 9,0 - 12,0 Gew.-% SiO₂ und 35,0 - 40,0 Gew.-% H₂SO₄, bezogen auf das Gesamtgewicht des Gelelektrolyten enthält.

10. Akkumulator nach einem der Ansprüche 1 bis 9, **dadurch gekennzeichnet, daß** der thixotrope Gelelektrolyt weiterhin bis zu 3,0 Gew.-%, vorzugsweise 1,0 - 3,0 Gew.-% Phosphorsäure enthält.

11. Akkumulator nach einem der Ansprüche 1 bis 10, **dadurch gekennzeichnet, daß** der thixotrope Gelelektrolyt weiterhin bis zu 1,5 Gew.-%, vorzugsweise 1,0 bis 1,5 Gew.-% Na₂SO₄ enthält.

12. Verfahren zur Herstellung eines wartungsfreien Akkumulators, insbesondere für Unterseeboote, nach einem der Ansprüche 1 bis 10, bei dem man
a) Zellengefäße (3) mit jeweils einem Plattenblock (4) mit positiven (5) und negativen (6) Plattensätzen bereitstellt, wobei die Platten (7, 8) jedes Plattensatzes (5, 6) elektrisch leitend miteinander verbunden sind,
b) für jedes Zellengefäß (3) ein Füllrohr (14) bereitstellt, das von oben in das Zellengefäß (3) hineinragt und in der Nähe des Bodens (3') des Zellengefäßes (3) und in einem Abstand dazu mündet,
c) einen thixotropen Gelelektrolyten (13) durch das Füllrohr (14) in das Zellengefäß (3) bis zu einer Füllhöhe von wenigstens 800 mm vom Boden (3') des Zellengefäßes (3) einleitet.

13. Verfahren nach Anspruch 12, **dadurch gekennzeichnet, daß** der thixotrope Gelelektrolyt (13) bis im wesentlichen unmittelbar vor dem Einleiten in das Zellengefäß (3) durch Rühren in fließfähigem Zustand gehalten wird.

14. Verfahren nach Anspruch 12 oder 13, **dadurch gekennzeichnet, daß** der thixotrope Gelelektrolyt (13) bis im wesentlichen unmittelbar vor dem Einleiten und/oder während des Einleitens in das Zellengefäß (3) bei einer Temperatur unterhalb von 25 °C, vorzugsweise bei einer Temperatur im Bereich von 10 °C bis 20 °C gehalten wird.

15. Verfahren nach einem der Ansprüche 12 bis 14, **dadurch gekennzeichnet, daß** man vor dem Einfüllen des Gelelektrolyten in das Zellengefäß (3) (Stufe c) die Platten (7, 8) der Plattensätze (5, 6) mit Wasser oder verdünnter Schwefelsäure befeuchtet oder benetzt, indem man die Platten (7, 8) vor dem Einsetzen in das Zellengefäß (3) in Wasser oder verdünnte Schwefelsäure eintaucht oder indem man nach dem Einsetzen der Platten (7, 8) in das Zellengefäß (3) dieses mit Wasser oder verdünnter Schwefelsäure befüllt und das Wasser anschließend ablaufen läßt oder absaugt, wobei verdünnte Schwefelsäure vorzugsweise bis zu 15 Gew.-% H₂SO₄ enthält.

16. Verfahren nach einem der Ansprüche 12 bis 15, **dadurch gekennzeichnet, daß** der thixotrope Gelelektrolyt (13) wenigstens 5,0 Gew.-% SiO₂ und wenigstens 25,0 Gew.-% H₂SO₄, bezogen auf das Gesamtgewicht des Gelelektrolyten enthält.

17. Verfahren nach einem der Ansprüche 12 bis 16, **dadurch gekennzeichnet, daß** man den thixotropen Gelelektrolyten (13) nach dem Einfüllen in das Zellengefäß erstarren läßt.

## Claims

1. A maintenance-free accumulator, in particular for submarines, comprising one or more cell containers (3) having a respective plate block (4) with positive (5) and negative (6) plate sets, wherein the plates (7, 8) of each plate set (5, 6) are electrically conductingly connected together and the cell containers (3) are filled with a thixotropic gel electrolyte, **characterised in that** the capacity per cell container (3) of the accumulator is at least 6000 ampere-hours (Ah) and the filling height of the cell containers with gel electrolyte from the bottom (3') of the cell containers (3) is at least 800 mm, produced by a process in which
a) cell containers (3) with a respective plate block (4) with positive (5) and negative (6) plate sets are provided, wherein the plates (7, 8) of each plate set (5, 6) are electrically conductingly connected together,
b) a filling pipe (14) is provided for each cell container (3), the filling pipe projecting from above into the cell container (3) and opening in the proximity of the bottom (3') of the cell container (3) and at a spacing therefrom, and
c) a thixotropic gel electrolyte (13) is introduced through the filling pipe (14) into the cell container (3) to a filling height of at least 800 mm from the bottom (3') of the cell container (3).

2. An accumulator according to claim 1 **characterised in that** the thixotropic gel electrolyte contains at least 5.0% by weight of SiO₂ and at least 25.0% by weight of H₂SO₄ with respect to the total weight of the gel electrolyte.

3. An accumulator according to one of claims 1 and 2 **characterised in that** the filling height of the cell containers with gel electrolyte from the bottom (3') of the cell containers (3) is at lest 1000 mm, preferably at least 1200 mm, particularly preferably at least 1500 mm.

4. An accumulator according to one of claims 1 to 3 **characterised in that** the capacity per cell container of the accumulator is at least 10000 ampere-hours (Ah), preferably at least 15000 Ah, particularly preferably at least 18000 Ah.

5. An accumulator according to one of claims 1 to 4 **characterised in that** each cell container is filled with at least 60 litres, preferably at least 100 litres, particularly preferably at least 150 litres of gel electrolyte.

6. An accumulator according to one of claims 1 to 5 **characterised in that** the negative plates (8) of the plate sets have a coated copper grid as a current collector and active mass carrier.

7. An accumulator according to one of claims 1 to 6 **characterised in that** the positive plates (7) of the plate sets are lead plates.

8. An accumulator according to one of claims 1 to 6 **characterised in that** the positive plates of the plate sets have a plurality of lead bars or lead cores which are pushed into mutually juxtaposed elongate pockets of a weave and are electrically connected together outside the pockets (tubular portion plates).

9. An accumulator according to one of claims 1 to 8 **characterised in that** the thixotropic gel electrolyte contains at least 9.0% by weight of SiO₂ and at least 30.0% by weight of H₂SO₄, preferably 9.0 - 12.0% by weight of SiO₂ and 35.0 - 40.0% by weight of H₂SO₄ with respect to the total weight of the gel electrolyte.

10. An accumulator according to one of claims 1 to 9 **characterised in that** the thixotropic gel electrolyte further contains up to 3.0% by weight, preferably 1.0 - 3.0% by weight of phosphoric acid.

11. An accumulator according to one of claims 1 to 10 **characterised in that** the thixotropic gel electrolyte further contains up to 1.5% by weight, preferably 1.0 to 1.5% by weight of Na₂SO₄.

12. A process for the production of a maintenance-free accumulator, in particular for submarines, according to one of claims 1 to 10, in which
a) cell containers (3) with a respective plate block (4) with positive (5) and negative (6) plate sets are provided, wherein the plates (7, 8) of each plate set (5, 6) are electrically conductingly connected together,
b) a filling pipe (14) is provided for each cell container (3), the filling pipe projecting from above into the cell container (3) and opening in the proximity of the bottom (3') of the cell container (3) and at a spacing therefrom, and
c) a thixotropic gel electrolyte (13) is introduced through the filling pipe (14) into the cell container (3) to a filling height of at least 800 mm from the bottom (3') of the cell container (3).

13. A process according to claim 12 **characterised in that** the thixotropic gel electrolyte (13) is kept in a fluid condition by stirring until substantially immediately prior to being introduced into the cell container (3).

14. A process according to claim 12 or claim 13 **characterised in that** the gel electrolyte (13) is kept at a temperature below 25°C, preferably at a temperature in the range of 10°C to 20°C, until substantially immediately prior to being introduced and/or while being introduced into the cell container (3).

15. A process according to one of claims 12 to 14 **characterised in that** the plates (7, 8) of the plate sets (5, 6) are moistened or wetted with water or dilute sulphuric acid prior to filling the gel electrolyte into the cell container (3) (step c)) by a procedure whereby the plates (7, 8) are immersed in water or dilute sulphuric acid before being fitted into the cell container (3) or after the plates (7, 8) have been fitted into the cell container (3) it is filled with water or dilute sulphuric acid and the water is then drained off or sucked away, dilute sulphuric acid preferably containing up to 15% by weight of H₂SO₄.

16. A process according to one of claims 12 to 15 **characterised in that** the thixotropic gel electrolyte (13) contains at least 5.0% by weight of SiO₂ and at least 25.0% by weight of H₂SO₄ with respect to the total weight of the gel electrolyte.

17. A process according to one of claims 12 to 16 **characterised in that** the thixotropic gel electrolyte (13) is left to harden after being introduced into the cell container.

## Revendications

1. Accumulateur sans entretien, en particulier pour sous-marins, avec un ou plusieurs bacs (3) d'éléments ayant respectivement un bloc (4) de plaques avec des faisceaux de plaques positifs (5) et négatifs (6), les plaques (7, 8) de chaque faisceau de plaques (5, 6) étant reliées entre elles de façon électriquement conductrice et les bacs (3) d'éléments étant remplis d'un électrolyte en gel thixotrope, **caractérisé en ce que** la capacité par bac (3) d'éléments de l'accumulateur est d'au moins 6 000 ampères-heures (ah) et la hauteur de remplissage des bacs d'éléments en gel électrolytique est d'au moins 800 mm depuis le fond (3') des bacs (3) d'éléments, obtenu par un procédé dans lequel on
a) prévoit des bacs (3) d'éléments ayant respectivement un bloc (4) de plaques avec des faisceaux de plaques (5) positifs et négatifs (6), les plaques (7, 8) de chaque faisceau (5, 6) de plaques étant reliées entre elles de façon électriquement conductrice,
b) prévoit pour chaque bac (3) d'éléments un tube (14) de remplissage qui s'insère depuis le haut dans le bac (3) d'éléments et débouche à proximité du fond (3') du bac (3) d'éléments et à distance de celui-ci,
c) introduit un électrolyte (13) en gel thixotrope par le tube (14) de remplissage dans le bac (3) d'éléments jusqu'à une hauteur de remplissage d'au moins 800 mm depuis le fond (3') du bac (3) d'éléments.

2. Accumulateur selon la revendication 1, **caractérisé en ce que** l'électrolyte en gel thixotrope contient au moins 5.0 % en poids de SiO₂ et au moins 25,0 % en poids de H₂SO₄ par rapport au poids total de l'électrolyte en gel.

3. Accumulateur selon l'une des revendications 1 ou 2, **caractérisé en ce que** la hauteur de remplissage des bacs d'éléments en gel électrolytique est d'au moins 1 000 mm, de préférence d'au moins 1 200 mm, en particulier de préférence d'au moins 1 500 mm depuis le fond (3') des bacs (3) d'éléments.

4. Accumulateur selon l'une des revendications 1 à 3, **caractérisé en ce que** la capacité par bac d'éléments de l'accumulateur est d'au moins 10 000 ampères-heures (ah), de préférence d'au moins 15 000 ah, en particulier de préférence d'au moins 18 000 ah.

5. Accumulateur selon l'une des revendications 1 à 4, **caractérisé en ce que** chaque bac d'éléments est rempli d'au moins 60 litres, de préférence d'au moins 100 litres, en particulier de préférence d'au moins 150 litres de gel électrolytique.

6. Accumulateur selon l'une des revendications 1 à 5, **caractérisé en ce que** les plaques négatives (8) des faisceaux de plaques présentent une grille de cuivre revêtue en tant que dérivateur de courant et support de masse active.

7. Accumulateur selon l'une des revendications 1 à 6, **caractérisé en ce que** les plaques positives (7) des faisceaux de plaques sont des plaques de plomb.

8. Accumulateur selon l'une des revendications 1 à 6, **caractérisé en ce que** les plaques positives des faisceaux de plaques présentent une pluralité de barres de plomb ou âmes de plomb qui sont insérées dans des poches oblongues disposées l'une à côté de l'autre et reliées électriquement entre elles en dehors des poches (plaques à petits tubes).

9. Accumulateur selon l'une des revendications 1 à 8, **caractérisé en ce que** l'électrolyte en gel thixotrope contient au moins 9,0 % en poids de SiO₂ et au moins 30,0 % en poids de H₂SO₄, de préférence 9,0 à 12,0 % en poids de SiO₂ et 35,0 à 40,0 % en poids de H₂SO₄ par rapport au poids total du gel électrolytique.

10. Accumulateur selon l'une des revendications 1 à 9, **caractérisé en ce que** l'électrolyte en gel thixotrope contient en outre jusqu'à 3% en poids, de préférence 1,0 à 3,0 en poids d'acide phosphorique.

11. Accumulateur selon l'une des revendications 1 à 10, **caractérisé en ce que** l'électrolyte en gel thixotrope contient en outre jusqu'à 1,5 % en poids, de préférence 1,0 à 1,5 % en poids de Na₂SO₄.

12. Procédé pour obtenir un accumulateur sans entretien, en particulier pour sous-marins, selon l'une des revendications 1 à 10, dans lequel on
a) prévoit des bacs (3) d'éléments ayant respectivement un bloc (4) de plaques avec des faisceaux de plaques positifs (5) et négatifs (6), les plaques (7, 8) de chaque faisceau (5, 6) de plaques étant reliées entre elles de façon électriquement conductrice,
b) prévoit pour chaque bac (3) d'éléments un tube (14) de remplissage qui s'insère depuis le haut dans le bac (3) d'éléments et débouche à proximité du fond (3') du bac (3) d'éléments et à distance de celui-ci,
c) introduit un électrolyte (13) en gel thixotrope par le tube (14) de remplissage dans le bac (3) d'éléments jusqu'à une hauteur de remplissage d'au moins 800 mm depuis le fond (3') du bac (3) d'éléments.

13. Procédé selon la revendication 12, **caractérisé en ce que** l'électrolyte (13) en gel thixotrope est maintenu par remuage à l'état liquide jusqu'essentiellement juste avant l'introduction dans le bac (3) à éléments.

14. Procédé selon la revendication 12 ou 13, **caractérisé en ce que** l'électrolyte (13) en gel thixotrope est maintenu jusqu'essentiellement juste avant l'introduction et/ou pendant l'introduction dans le bac (3) d'éléments à une température inférieure à 25°C, de préférence à une température comprise entre 10°C et 20°C.

15. Procédé selon l'une des revendications 12 à 14, **caractérisé en ce qu'**on humidifie ou mouille les plaques (7, 8) des faisceaux (5, 6) de plaques avec de l'eau ou de l'acide sulfurique dilué avant le remplissage de l'électrolyte en gel dans le bac (3) d'éléments (niveau C), les plaques (7, 8) étant trempées dans de l'eau ou de l'acide sulfurique dilué avant d'être placées dans le bac (3) d'éléments ou les plaques (7,8) étant d'abord placées dans le bac (3) d'éléments et celui-ci étant rempli d'eau ou d'acide sulfurique dilué, eau que l'on laisse ensuite s'écouler ou que l'on aspire, l'acide sulfurique dilué contenant de préférence jusqu'à 15% en poids de H₂SO₄.

16. Procédé selon l'une de revendications 12 à 15, **caractérisé en ce que** l'électrolyte (13) en gel thixotrope contient au moins 5,0% de poids en SiO₂ et au moins 25,0 % en poids de H₂SO₄ par rapport au poids total de l'électrolyte en gel.

17. Procédé selon l'une de revendications 12 à 16, **caractérisé en ce qu'**on laisse l'électrolyte (13) en gel thixotrope se figer une fois rempli dans le bac d'éléments.
